(19) Europäisches Patentamt / European Patent Office / Office européen des brevets

(11) **EP 3 302 094 B1**

(12) **EUROPEAN PATENT SPECIFICATION**

(45) Date of publication and mention of the grant of the patent:
**19.02.2025 Bulletin 2025/08**

(21) Application number: **16742026.4**

(22) Date of filing: **30.05.2016**

(51) International Patent Classification (IPC):
*A23K 10/30* (2016.01)        *A23L 5/30* (2016.01)
*A23K 10/37* (2016.01)        *A23K 10/38* (2016.01)
*A23K 50/10* (2016.01)        *A23L 7/10* (2016.01)
*A23L 19/10* (2016.01)

(52) Cooperative Patent Classification (CPC):
(C-Sets available)
**A23K 10/30; A23K 10/37; A23K 10/38;
A23K 50/10; A23L 5/36; A23L 7/10; A23L 19/10;**
A23V 2002/00; A23V 2300/00; Y02P 60/87   (Cont.)

(86) International application number:
**PCT/NL2016/050387**

(87) International publication number:
**WO 2016/195487 (08.12.2016 Gazette 2016/49)**

(54) **A METHOD FOR INCREASING THE NUTRITIONAL VALUE OF VEGETABLE MATERIALS**

VERFAHREN ZUR ERHÖHUNG DES NÄHRWERTES VON PFLANZLICHEN STOFFEN

PROCÉDÉ POUR AUGMENTER LA VALEUR NUTRITIVE DE MATIÈRES VÉGÉTALES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2015 NL 2014888**

(43) Date of publication of application:
**11.04.2018 Bulletin 2018/15**

(73) Proprietor: **Agrifirm North West Europe Holding
B.V.
7325 AW Apeldoorn (NL)**

(72) Inventors:
• **WEURDING, Roelof Eduard**
  **7325 AW Apeldoorn (NL)**
• **VAN HEES, Josephus Johannes Antonius**
  **7325 AW Apeldoorn (NL)**

(74) Representative: **Algemeen Octrooi- en
Merkenbureau B.V.
P.O. Box 645
5600 AP Eindhoven (NL)**

(56) References cited:
WO-A1-01/72143        DE-B3- 102009 038 624
NL-A- 9 300 976        US-A1- 2014 011 742

• DATABASE WPI Week 197416, Derwent World Patents Index; AN 1974-30022V, XP002761659
• OBERNDORFER C ET AL: "THE EFFECT OF RAPESEED TREATMENT BY MICROWAVE AND RADIO-FREQUENCY APPLICATION ON OIL EXTRACTION AND OIL QUALITY. PART 1: INFLUENCE ON MECHANICAL OIL EXTRACTION", FETT - LIPID.FAT SCIENCE TECHNOLOGY, WILEY-VCH VERLAG,WEINHEIM, DE, vol. 101, no. 5, 1 May 1999 (1999-05-01), pages 164 - 167, XP000827152, ISSN: 0931-5985, DOI: 10.1002/(SICI)1521-4133(199905) 101:5<164::AID-LIPI164>3.3.CO;2-T

**(Cont. next page)**

(52) Cooperative Patent Classification (CPC): (Cont.)

C-Sets
A23V 2002/00, A23V 2300/00, A23V 2300/48

**Description**

The present invention relates to a method of using a vegetable material as a feed for ruminants said vegetable material being subjected to direct heating by means of radiation in the radio frequency range; that vegetable material thus treated having an increased nutritional value. In other words, the present invention relates to a method of treating a vegetable material to obtain a vegetable material having an increased nutritional value and using said as feed for ruminants. The method according to the present invention is mainly related to increasing the protein, starch and/or fat utilization of the material by (farm) animals, namely ruminants.

Methods for increasing the utilization of proteins in proteinaceous animal feed by ruminants are disclosed by prior art documents. These methods include: (a) chemical treatment with tannin, as disclosed in US patent No. 3,507,662, (b) chemical treatment with formaldehyde, as disclosed in US patent No. 3,619,200, (c) adding sugars to the proteinaceous animal feed and heating the mixture at a determined temperature and pH conditions, as disclosed in US patent No. 5,023,091, (d) mixing the proteinaceous animal feed with a carbohydrase enzyme, followed by heating of the mixture at a determined temperature, pH and percentage moisture; (e) heating the proteinaceous animal feed using compressive pressures, i.e. heating the product by frictional heat, for increasing the utilization of proteins by reducing the degradability of said materials as disclosed in US patent no. 3,695,891; (f) microwave radiation as discussed in Dong. S. et al, Asian Australas. J. Anim. Sci. 18, 2005, 27-31; Sadeghi A. et al, Anim. Sci. 80, 2005, 369-375; Brodie G. etal, J. Microwave Power E. E. 46, 2012, 57-67.

The methods (a)-(d) all involve the reaction of the proteinaceous animal feed with an added reagent. Method (e) has the disadvantage that there is a risk of excessive heating leading to protein in the feed that is indigestible in the post-rumen tract. Method (f) has the disadvantage that the heating is not homogeneous and only the outer layer of the treatment material is sufficiently heated, generating large inhomogeneous products, and leads to a drawback that this method is not applicable on large scale since the heat has to penetrate the remainder of the product by means of convection and/or conduction.

Methods for increasing the utilization of starch in starch-containing animal feed by ruminants are disclosed by prior art documents: Dong. S. et al, Asian Australas. J. Anim. Sci. 18, 2005, 27-31; Sadeghi A. et al, Anim. Sci. 80, 2005, 369-375 and Brodie G. et.al, J. Microwave Power E. E. 46, 2012, 57-67, for example, showed that starch and protein digestibility is increased by heating animal fodder by means of microwaves, at a frequency of 2.45 GHz and a power ranging between 750 W and 6 kW.

JP S49 12709 B1 describes the removal of odour and astringent taste from a defatted soybean cake by low temperature extraction by irradiating the cake for several minutes with radiation of frequency 40-2450 MHz. NL 9 300 976 A relates to a method for changing the kinetics of a reaction wherein at least one macromolecule is involved, wherein the at least one macromolecule is treated with electromagnetic energy of a frequency in the range of 0.1-350 MHz. Oberndorfer et al. (The effect of rapeseed treatment by microwave and radio-frequency application on oil extraction and quality, Fat Science Technology, Wiley-VCH Verlag, Weinheim, DE, vol. 101, no. 5, 1 May 1999, pages 164-167) reported that the pretreatment of rapeseed with microwave and radiofrequency energy led to an obvious increase of the exploitation rate, and to an influence on quality parameters of the oil. US 2014/011742 A1 discloses a process for treating a protein before hydrolytic digestion, the process comprising exposing the protein to at least one cycle of microwave irradiation to produce a microwave treated protein containing one or more bioactive peptides. DE 10 2009 038624 B3 discloses a method for the treatment of oil seeds for feed to improve utilization of the valuable components, the treatment involving microwave heating. WO 01/72143 A1 discloses grain and corn mixture processing wherein the products undergo repeated exposure to UV with a wavelength of 230-240 nm during a period ranging from 1 to 300 min and the grain and crop mixture is consecutively conditioned from 5 to 72 hours.

There is a need in the field of feed preparation for an efficient, safe and reliable method for treating a vegetable material in order to increase the nutritional value and to increase the value of said material in ruminant feed manufacture.

It is another object of the present invention to provide a method for increasing the nutritional value of vegetable material that is used as a ruminant feed in which only direct heating is used.

It is another object of the present invention to provide a method for increasing the nutritional value of vegetable material that is used as ruminant feed without the need to use chemical reagents.

A further object of the present invention is to provide a method for increasing the nutritional value of a vegetable material which is suitable for use as or for being processed into feed for ruminants.

One or more of the above cited objects are achieved by the several aspects and embodiments of the present invention as discussed below.

**Summary of the invention**

In a first aspect, the present invention relates to a method according to claim 1.

The key to the present invention is to increase the nutritional value of a vegetable material by using heating by means of radiation in the radio frequency range (also called RF heating in the present invention).

The invention relates to a method for increasing the nutritional value of a vegetable material by subjection of a vegetable material to heating by means of radiation in the radio frequency range and by using said treated material as a feed for ruminants.

In an embodiment, the range of radio frequency radiation is 27.12 MHz $\pm 0.6$ %.

In an embodiment, the vegetable material is selected from grains, tubers and residual vegetable materials and one or more combinations thereof.

In an embodiment, the residual vegetable material is a residue of grain or tuber processing. In an embodiment, the residual vegetable material is a residue of processing of rapeseed, soybean or sunflower seed or a combination thereof. In an embodiment, the residual vegetable material is selected from the group consisting of rapeseed meal, soybean meal, sunflower seed meal, dehydrated Alfalfa meal, dehydrated grass meal, DDGS corn and one or more combinations thereof.

In an embodiment, the grains are selected from the group consisting of cereal grains, legumes and oilseeds, more preferably corn, peas, sweet lupines, soybeans, rapeseed, wheat, barley and one or more combinations thereof.

In an embodiment, the tubers are selected from the group consisting of potato, such as the by product potato protein, yam, sweet potato, cassava and one or more combinations thereof.

In an embodiment, the material is subjected to RF radiation to achieve a temperature of between 110°C and 165°C, such as between 120 °C and 165 °C, even more preferably between 130°C and 165°C, most preferably between 130 and 150 °C .

In an embodiment the processing time of the vegetable material subjected to heating by means of radiation in the radio frequency range between 10 minutes and 1.5 hours, such as between 20 minutes and 1 hour, more preferably between 20 minutes and 50 minutes, such as between 20 minutes and 45 minutes, or between 20 and 35 minutes.

### Drawings

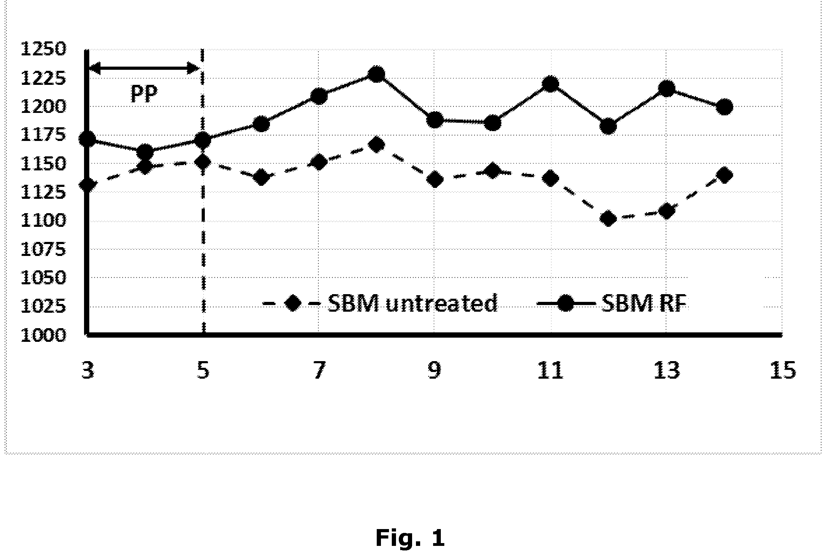

Figure 1 is a graph showing the effect of RF treatment of soybean meal on the protein content of milk from lactating cows.

### Definitions

The following definitions are used in the present description.

"Residual vegetable material" as used in the present application means: a material that remains after a raw vegetable material has been processed for obtaining one or more primary products; for example: a residue after processing of grains or tubers; or a residue after use of vegetable materials for obtaining biofuels, such as the so-called dried distillers grains and solubles (DDGS).

"Meal" as used in the present application means: the residual vegetable material that remains after processing of grains. It is a by-product obtained after either chemical extraction of oil (extracted meal) or after pressing to obtain oil (expeller meal). Meal according to the present invention includes both extracted meal or expeller meal.

"Radio frequency treatment" or "RF treatment" or "RF heating" as used in the present application means: subjecting a material to an alternating electromagnetic field of RF radiation. With radio frequency treatment the polarity of the electric field is changed several million times per second. This quick reversal and constant realignment of molecules within the product will generate heat (thermal energy).

"Indirect heating" as used in the present application means: a heating method in which heat is generated externally to a material and is then transferred to its external surface by conduction, convection and/or radiation.

"Direct heating" as used in the present application means: a heating method in which heat is generated within a material itself, such as radio frequency (RF) heating.

"rumen resistant fraction" as used in the present application means: the fraction of the feed material that passes the rumen without being degraded. This is sometimes also called rumen undegraded fraction.

"in situ nylon bag technique": is the standard technique used for measuring the degradation of materials in the rumen and/or the intestines. In this technique nylon bags filled with a material are introduced into the rumen and/or the intestines of cows.

"processing time", $(t_p)$ as used in the present application means: the time needed for bringing a material from an initial temperature, for example room temperature, to a final temperature $(T_f)$ by using RF radiation.

"holding time", $(t_h)$ as used in the present application means: the time during which a material is hold at a specific temperature, by means of, for example an oven. During the holding time no RF radiation is applied.

### Detailed description of the invention

#### Radio frequency

RF radiation has working frequencies in the range of tens of megahertz. The frequency most commonly used in industrial equipment is about 27 MHz, corresponding to a wavelength of about 11 m; however a frequency of about 13 MHz is also often used. Radio frequencies can be used to endogenously heat a large volume of a product, viz. layers in the range of a meter. On the contrary, microwaves can penetrate only small layers, in the range of centimeters.

By using radio frequency, the energy for the required treatment is applied by a couple of electrodes, whose geometry is designed and set according to the product shape and size, receiving such energy from the generator. The electrodes are in fact the opposite plates of a capacitor and the product between them is the dielectric which, depending on its physical-chemical characteristics, absorbs the energy evenly and diffusely, notwithstanding its shape and size. Radio frequency treatment is a direct heating method.

The present invention typically uses RF that are in the so-called industrial, scientific and medical (ISM) radio bands (portions of the radio spectrum) which are reserved internationally for industrial, scientific and medical purposes other than telecommunications. The ISM bands are defined by the ITU-R in 5.138, 5.150, and 5.280 of the Radio Regulations. In one specific embodiment, the RF is 27.12 MHz $\pm$0.6 % (between 26.957 MHz and 27.283 MHz). In another specific embodiment, the RF is 13.56 MHz $\pm$0.05 % (between 13.553 MHz and 13.567 MHz). In another specific embodiment, the RF is 40.68 MHz $\pm$0.05 % (between 40.66 MHz and 40.7 MHz).

It should be noted that typically an apparatus is set to one specific radio frequency with a certain variation range. The used working frequency depends on the regulations of each country as shown above. For the Netherlands, in 2015, the allowed radio frequency is set to 27.12 MHz $\pm$0.6 %.

In an embodiment, the vegetable starting material is heated by means of said radiation to a final temperature of between 110°C and 165°C, such as between 120 °C and 165 °C, even more preferably between 130°C and 165°C, most preferably between 130°C and 150°C. These temperatures are the temperatures of the vegetable material. These temperatures are reached after radiation is applied to the material which increases the temperature of the material. The radiation is applied in such a manner that the final temperature that the material reaches is the temperature specified above. The temperature is measured using known means, e.g. a thermocouple at one or more locations in the material during irradiation.

The duration of the RF treatment (processing time) depends on the equipment used and may be determined by a person skilled in the art. The duration of the holding time was found by the present inventor to have no real effect on the results; only the processing time and temperature were found to have a real effect on the results. However, if for whatever reason a certain holding time is desired. It is within the scope of the invention to apply such a holding time after the RF treatment. As a non-limiting example, the duration of the irradiation is at least 10 minutes, such as between 10 minutes and 1.5 hours, such as between 20 minutes and 1 hour, more preferably between 20 minutes and 50 minutes, such as between 20 and 45 or between 20 minutes and 35 minutes. However, based on the settings and efficiency of the apparatus used, the intensity of the radiation, the amount of material irradiated and other factors, a person skilled in the art may be able to determine an optimal duration based on the final temperature desired. The power or intensity of the radiation may also vary and is partly dependent on the treated product and the efficiency of the apparatus used. It may for example be between 0.1 and 0.2 kWh/kg starting material.

#### Vegetable materials for use as starting material

The vegetable material used in the method according to the present invention is preferably selected from grains, tubers and residual vegetable materials and one or more combinations thereof. It should be noted that "grains" also include "seeds" as discussed below in the section regarding grains.

#### *Grains* as *starting material*

Grains may be used as starting material for the present method. In other words, grains may be subjected to a radiation treatment using RF radiation.

In an embodiment, the grains are selected from the group consisting of cereal grains, legumes and oilseeds.

In an embodiment, the cereal grains may be selected from the group consisting of barley, oats, rice, rye, spelt, teff, triticale, wheat, corn, sorghum, and millet. Other cereal grains known in the art may also be used. These may be used as such or in the form of granulates, flakes, or ground or other forms.

In an embodiment, the legumes (also called pulses) may be selected from the group consisting of soybeans, (sweet) lupines, fava beans, peas, chickpeas, common beans, and lentils. Other legumes known in the art may also be used. These may be used as such or in the form of granulates, flakes, or ground or other forms.

In an embodiment, oilseeds may be selected from the group consisting of rapeseed (including canola), safflower seed, sunflower seed, flax seed (also called linseed). Other oilseeds known in the art may also be used. These may be used as such or in the form of granulates, flakes, or ground or other forms.

In an embodiment, the grains according to the present invention that are subjected to RF radiation are selected from the group consisting of: corn, soybeans, rapeseed, wheat, barley and one or more combinations thereof. These may be used as such or in the form of granulates, flakes, or ground or other forms.

### *Tubers as starting material*

In another embodiment, tubers may be used as starting materials, examples of stem tubers such as potatoes and yams, and root tubers, such as sweet potato, cassava and combinations thereof.

### *Residual vegetable material as starting material*

Residual vegetable material may be used as starting material for the present method. In other words, residual vegetable materials may be subjected to a radiation treatment using RF radiation.

In an embodiment, the residual vegetable material is residue of grain processing, preferably a residue of processing of rapeseed, soybeans, wheat, barley or corn and one or more combinations thereof, more preferably rapeseed meal, soybean meal, sunflower seed meal , corn gluten feed, wheat middlings, and one or more combinations thereof.

In another embodiment, the residual vegetable material is a residue of tuber processing, preferably a residue of processing potatoes, yams, sweet potato, cassava (to obtain tapioca), and combinations thereof.

In another embodiment the residual vegetable materials comprises residue after use of vegetable materials for obtaining biofuels, so called DDGS , e.g. DDGS corn

In another embodiment the residual vegetable materials comprise dried roughages like grassmeal (dehydrated) and alfalfa meal (dehydrated) or pellets of these materials.

### Nutritional value of vegetable materials

The vegetable materials used as starting materials in the method according to the present invention have varying compositions. The method according to the invention is suitable for them all. The results of the treatment with RF differs when different starting materials are used.

Some materials, for example most residual materials, have a relatively high protein content and a small starch content. Some materials, for example, cereal grains, have a relatively high starch content and a low protein content. Other materials, for example oilseeds, have a relatively high protein and fat content. In the following more information is provided regarding the increase in nutritional value of proteins, starch and fat of the starting material. The present method is capable of increasing the nutritional value of one or more of these components, protein, starch and fat.

### *Increasing nutritional value of protein*

The present invention relates to the improvement of the nutritional value of vegetable materials, e.g. comprising proteins. Vegetable materials that are considered to be protein-containing are grains and residual material. The protein content of these starting materials may vary between 6 and 50 wt.% based on dry matter for grains and between 10 and 90 wt.% based on dry matter for residual materials. However, starting materials having other protein contents may also be used. The protein content of the starting material is not limiting for the present invention.

Typically, the method according to the present invention does not alter the total protein content of the product. Due to the heating water will evaporate so the protein content is determined on dry matter base (also called based on the dry fraction of the product).

The RF treatment method according to the present invention has an effect on increasing the nutritional value for ruminants for example by decreasing the protein solubility and by increasing the protein fraction that is resistant to microbial degradation in the rumen; therefore passing to the small intestine leading to a higher absorbable protein value and a more efficient use of dietary protein.

The resistance to microbial degradation in the rumen of a ruminant is determined in sacco by the so-called RUP test (rumen undegraded protein). These test are however complicated and costly and therefore the present inventors propose an in vitro protein rumen degradation test (also called Aufrère test) that is able to predict the RUP results. This reduces costs and allows an easy test to see if one RF treatment is more or less successful than another RF treatment. In an embodiment, the RUP increases by 10 to 60 percentage units.

In order to have a good estimate of the protein digestion in the small intestine, an in vitro ileal protein digestibility test (VIPD) is carried out. The VIPD value gives an indication of the protein fraction that is enzymatically degraded in the small intestine. It would therefore be beneficial if the VIPD value does not decrease - indicating no detrimental effect on protein digestion in the small intestine.

The increased nutritional value may be determined by comparing the protein fraction that is resistant to microbial degradation in the rumen and the protein fraction that is digestible in the intestine. The rumen resistance fraction can be estimated by in vitro Aufrère or in situ rumen degradation measurement (RUP) and the digestible fraction can be estimated by in vitro ileal protein digestibility (VIPD) or in situ intestinal digestibility measurement (dRUP).

The nutritional value may be determined by comparing the values of e.g. digestible protein on the starting material and on the RF treated product. The values of digestible protein or intestinal digestible protein are estimated based on rumen resistance fraction (estimated by Aufrère or *in situ* by RUP); and digestibility of the rumen resistant fraction in the intestine (estimated by vitro ileal protein digestibility (VIPD) or in situ digestibility measurements (dRUP). The digestibility of the feed in the small intestine which is directly related to the uptake of nutrients by the animal is determined by determining the amount of protein that is digested in the intestine.

It is known that when a protein-containing material is heated, this may lead to a degradation of lysine. Using the method according to the present invention, the lysine content of the vegetable material may decrease depending upon the final heating temperature. Lysine is generally considered to be a limiting amino acid for ruminants; therefore it is preferred to limit the decrease of lysine content.

The higher the temperature used (within a certain range as specified above), the larger the effect on increasing the nutritional value of the protein but also the larger the decrease of lysine. This leads to a simultaneous decrease in the nutritional value of the material. However, it was surprisingly found by the present inventor that the overall nutritional value still increased due to the increased RUP. The present inventor has observed that there should be a balance between the RUP value and the lysine content by carefully selecting the final temperature and processing time. This is shown in more details in the Examples.

Embodiments for soybean meal, extracted

Untreated soybean meal, extracted typically has an Aufrère value of between 30 and 55 %, such as between 40 and 53 % depending on production conditions in the extraction plant. It is desired to obtain an Aufrère value of between 60 and 80 %, such as between 60 and 70 %, after the treatment of the present invention.

Embodiments for rapeseed meal, extracted

Untreated rapeseed meal, extracted typically has an Aufrère value of between 60 and 65%, depending on production conditions in the extraction plant. It is desired to obtain an Aufrère value of between 70 and 85%, such as between 70 and 75%, after the treatment of the present invention.

Embodiments for rapeseed meal, expeller

Untreated rapeseed meal, expeller typically has an Aufrère value of between 20 and 35%, depending on production conditions in the extraction plant. It is desired to obtain an Aufrère value of between 60 and 85%, such as between 60 to 65%, after the treatment of the present invention.

Embodiments for whole soybeans

Untreated soybeans typically have an Aufrère value of between 10 and 20 %. It is desired to obtain an Aufrère value of between 40 and 75%, preferably between 50 % and 65 % after the treatment of the present invention.

Embodiments for whole corn

Untreated corn typically has an Aufrère value of between 70 to 75 %. It is desired to obtain an Aufrère value of between 75 % and 85 % after the treatment of the present invention.

Embodiments for whole wheat

Untreated wheat typically has an Aufrère value of between 45 and 55 %. It is desired to obtain an Aufrère value of between 55 % and 70%, such as between 60 % and 70 %, after the treatment of the present invention.

Embodiments for whole barley

Untreated barley typically has an Aufrère value of between 55 and 65 %. It is desired to obtain an Aufrère value of between 70 % and 85 %, after the treatment of the present invention.

## Increasing nutritional value of starch

In addition to feed ingredients comprising protein several feed materials also comprise starch. It was surprisingly found by the present inventor that the RF heating also has a beneficial effect on starch. It is therefore also an aspect of the present invention to use RF heating for increasing the nutritional starch value of vegetable materials for using as a feed for ruminants.

Vegetable materials that are considered to be protein- and starch-containing are the following: cereal grains, most legumes, tubers and residues thereof. The protein content of these materials may vary between 8 and 70 wt.% based on dry matter. The starch content of these starting materials may vary between 12 and 80 wt.% based on dry matter. However, starting materials having other starch and/or protein contents may also be used. The starch and/or protein content of the starting material is not limiting for the present invention.

Typically, the method according to the present invention does not alter the total protein and/or starch content of the product. Due to the heating water will evaporate so the protein and/or starch content is determined on dry matter base.

In most Dutch feed evaluation systems the value of dietary starch is increased when more starch escapes degradation in the rumen and is enzymatically digested in the small intestine. Starch is hydrolyzed into glucose molecules and these are absorbed in the small intestine and serve as glucogenic nutrients generally leading to a more efficient milk (protein) production. It would therefore be beneficial if the rumen undegradable starch (RUS) fraction is increased without detrimental effects on starch digestion in the small intestine.

## Increasing nutritional value of fat

In addition to feed ingredients comprising protein or starch several feed materials also comprise fat. It was surprisingly found by the present inventor that the RF heating also has a beneficial effect on fat. It is therefore also an aspect of the present invention to use RF heating for increasing the nutritional fat value of vegetable materials for using as a feed for ruminants.

Vegetable materials that are considered to be protein- and fat-containing are the following: soybeans, rapeseed, linseed (flaxseed), safflower seed and sunflower seed. The protein content of these materials may vary between 10 and 40 wt.% based on dry matter. The fat content of these starting materials may vary between 20 and 50 wt.% based on dry matter. However, starting materials having other fat and/or protein contents may also be used. The fat and/or protein content of the starting material is not limiting for the present invention.

Typically, the method according to the present invention does not alter the total protein and/or fat content of the product. Due to the RF heating water will evaporate so the protein and/or fat content is determined on dry matter base. It would be beneficial if the rumen undegradable fat (RUF) fraction is increased without detrimental effects on fat digestion in the small intestine.

The value of dietary fat is increased when fat is protected in the rumen.

## Analyses

### Chemical analyses

Several chemical analyses have been carried out in laboratories in order to provide information about the starting materials as well as the products. These techniques will be discussed in more detail below.

Moisture content: this relates to the amount of water. There is a difference in the moisture content of the starting material and the product since due to the heating water is evaporated. The moisture content of the starting material depends on the type and source of the starting material. The moisture content is determined using the method according to the EU Regulation (EC) No. 152/2009, Annex III, L54/12-14 (2009).

Crude protein content: The protein content is determined using the so-called crude protein method (N x 6.25). The protein content may be determined for both the starting material and/or the product. The determination is done based on the assumption that proteins contain 16 percent Nitrogen. The analysis is carried out using the method described in the EU Regulation (EC) No. 152/2009, Annex III, L54/15-19 (2009).

Starch content: the starch content is determined using ISO 15914:2004 "Enzymatic determination of total starch content". The starch content is determined for both the starting material and/or the product.

Lysine content (g/kg) is determined according to the total amino acid method disclosed in ISO13903 (2005).

<u>Fat content</u>: EU guideline 152/2009 27 januari 2009; appendix III H L54 /37-39.

*In vitro analyses*

Several in vitro analyses have been carried out in laboratories in order to give an estimate of the increase in the nutritional value of the RF treated vegetable materials according to the invention. These techniques simulate the behavior of nutrients in the animal and they will be discussed in more detail below.

<u>in vitro protein rumen degradation</u>: This relates to rumen undegraded protein (RUP). The Aufrère test is used, which is a standardized enzymatic laboratory technique to determine protein degradability in order to evaluate and predict the rumen degradability of various protein sources (Aufrère and Cartailler, 1988; Aufrère et al., 1991; Cone et al., 1996). In the present description RUP value and Aufrère are used as synonyms. In the present invention the Aufrère method is used as specified here:

This test is based on the measurement of protein hydrolysis. Samples are hydrolyzed with a protease in a basic buffer. A borate-phosphate buffer (pH 8.0) is prepared using 21.6 g of sodium dihydrogen phosphate and 17.8 g of sodium tetraborate dissolved in 1.5 L of water wherein the pH is adjusted using 4M NaOH. A 10 mg/ml tetracycline solution in said buffer is prepared. A solution of 12.3 mg of protease (of Streptomyces griseus), 10 mg of nystatin suspended in a small amount of the borate-phosphate buffer, 10 ml of the tetracycline solution are mixed with buffer to reach 1 liter. The enzyme-solution should be brought to 40°C and approx. 500 mg of the sample to be measured is precisely weighted in a glass container and 50 ml of the enzyme-solution is added. As a blank only the enzyme-solution without sample is taken. The samples are incubated for a period of 24 hours at 40 °C in a water bath. The sample is mildly agitated at 1, 6 and 23 hours during 4 minutes at 60 rpm. The glass containing with sample is carefully transferred to an ice bath for 10 minutes and then the sample is filtered over a paper filter. Of the filtrate 25 ml is taken and two Kjeldahl C tablets (5 g $K_2SO_4$ + 0.1 g $CuSO_45H_2O$) and 20 ml of 96 % sulfuric acid is added to destruct the amino acids. This is heated/evaporated at 150 °C during 1 night. The amount of remaining nitrogen in the sample is determined using the Kjeldahl method using a Kjeltec 2400KT off Foss according to EU Regulation (EC) No. 152/2009, Annex III, L54/15-19 (2009). To calibrate for a specific batch of protease used a sample having a known amount of nitrogen should be tested.

<u>vitro ileal protein digestibility (VIPD)</u>: This feature relates to the digestibility of protein in the small intestine of animals. This test comprises a standardized enzymatic laboratory treatment of the vegetable material, and the in vitro ileal protein digestibility of the vegetable material is then given by the protein fraction of the material that is dissolved by the enzymatic treatment.

In the present invention the VIPD test is performed at 39 $\pm$ 0.5 °C, and it comprises two main phases, viz. 1) simulation of the stomach; it involves protein digestion by pepsin at pH 3 during 1 hour; 2) simulation of the small intestine; it involves protein digestion by pancreatin (including amylase, chymotrypsin, trypsin and lipase activity) at pH 6,5 during 2 hours.

The specific steps of this test are the following:

(i) preparing a suspension of 1 g of the vegetable material to be tested and 40 mL of an aqueous pepsin solution with a concentration of 0.081% m/v;
(ii) mixing the amount of 1M hydrochloric acid needed for acidifying the suspension to pH 3.0;
(iii) allowing the suspension to react during 1 hour at around 39°C by agitated every 15 minutes with a glass rod;
(iv) adding 2.5 ml 1M phosphate buffer pH 6.6 and 2.5 ml of a suspension prepared using 24 g pancreatin (pork) and 0.15 g bile salts in 150 ml water;
(v) allowing the suspension to react during 2 hours at around 39°C by agitated every 15 minutes with a glass rod;
(vi) adding 5 ml 10%w/v sodium carbonate solution and agitated with a glass rod;
(vii) filtrating the suspension over a P-2 glass filter (with about 1.5 cm Filteraid® on top of the filter);
(viii) supplement the filtrate with water to obtain a total volume of 250 ml and mix;
(ix) mixing 50 ml of the filtrate, two Kjeldahl C tablets (5 g $K_2SO_4$ + 0.1 g $CuSO_45H_2O$) and add 20 ml of 96% sulfuric acid to destruct the protein. This is heated/evaporated at 150°C during 1 night;
(x) determining the amount of nitrogen in the filtrated using the Kjedahl method using a Kjeltech 2400KT off Foss according to EU Regulation (EC) No. 152/2009, Annex III, L54/15-19 (2009);
(xi) to correct for the protein amount added by the used enzymes, a blank sample should be taken into the test;
(xii) vitro protein digestibility (VIPD) is then calculated as the relative amount of protein which has become solubilized during this test.

*In situ (in sacco) analyses*

In situ analyses have been carried out in animals by specialized institutes.

<u>*In situ*</u> rumen degradation: the amount of a nutrient that is degraded (for example protein (RUP), starch (RUS) or fat (RUF)), after subjecting a sample of a material to the *in situ degradation* test, measured according to the Dutch 2003 Protocol for In Situ Rumen Incubations: Determination of Degradation Rate and Washable Fractions of Protein, Starch, Cell Walls and Organic Residual Fraction (Dutch: Protocol voor in situ pensincubatie: bepaling van afbraaksnelheid en uitwasbare fracties van eiwit, zetmeel, celwanden en organische restfractie; 10 december 2003, Centraal Veervoederbureau, Lelystad, pages 1-14). The amount of the nutrient that is not degraded in this test is defined as rumen undegradable; viz. RUP for Rumen Undegradable Protein, RUS for Rumen Undegradable Starch, and RUF for Rumen Undegradable Fat. An in situ nylon bag technique is used for this method. Test cows having a rumen cannula were used. At least 5 different incubation times in the rumen were used; 20 to 35 nylon bags were incubated per cow. After incubation in the rumen, the material containing nylon bags were brought into ice water; followed by freezing. Subsequently, after thawing the bags were washed using a standard washing machine with water at room temperature, without centrifugation. After washing the material containing nylon bags were freeze-dried. Residual material from the bags were pooled per animal and ground through 1 mm screens, the residues were analyzed for the specific nutrient content.

In situ intestinal digestibility (dRUP): this is the amount of protein that is digested in the intestines. The in situ nylon bag technique was used and as a starting point nylon bags were used that have undergone the in situ rumen protein degradation test (16 hours) and subsequent pepsin-HCl treatment to resemble passage through the abomasum. The present in situ study provides valuable information about the amount of protein that is being taken up in the intestines; an increase in this value means an increase in the nutritional value of the feed material. The dRUP is expressed in a percentage (%) of the amount of RUP and is estimated using the method disclosed in Animal (2014), 8:11, pp 1839-1850: "The energy and protein value of wheat, maize and blend DDGS for cattle and evaluation of predicting methods" by J. L. De Boever, M. C. Blok, S. Millet, J. Vanacker and S. De Campeneere. It is calculated per cow according to the equation below:

$$\frac{(In(gram) * CPC) - (Out(gram) * CPC)}{In(gram) * CPC}$$

Wherein "In(gram)" is the sum of all the weighed rumen residues, being the contents of the nylon bags that remained after the in situ rumen protein degradation test (16 h) in grams. Wherein the CPC stands for crude protein content and is the fraction of the total weight that is protein (e.g. a protein content of 16% gives a CPC of 0.16). Wherein "out(gram)" is the sum of all the weighed intestinal residues, being the contents of the mobile nylon bags that remained after the in situ intestinal digestibility test in grams. Cows having a T-cannula in the upper part of the duodenum were used. Ten bags were incubated per residue per cow. Immediately before insertion in the duodenum, bags were soaked in a pepsin-0.1 N HCl-solution at 39 °C to simulate digestion in the abomasum. Every 20 min four bags were incubated in the duodenum. After passage through the intestines, bags were almost directly recuperated from the feces, rinsed and frozen. After thawing, they were intensively machine-washed at least four times using water at 40°C and finally spinning at 700 rpm. After freeze-drying, pooling per animal and grinding through 1 mm, the residues were analyzed for crude protein content.

**Examples**

As specified above, the present invention is related to a method for increasing the nutritional value of a residual vegetable material and using said treated material as a feed for ruminants. In order to increase the nutritional value of said residual vegetable material, said material is heated by means of radiation in the radio frequency range.

In the section below the examples are numbered according to the vegetable material used. Examples 1 use soybean meal, extracted (SME); Examples 2 use rapeseed meal, extracted (RME); Examples 3 use soybean meal, expeller (SMP); Examples 4 use rapeseed meal, expeller (RMP); Examples 5 use whole soybeans; Examples 6 use whole rapeseed; Examples 7 use ground corn; Examples 8 use whole corn; Examples 9 use ground wheat; Examples 10 use whole wheat; Examples 11 use whole barley; Examples 12 use potato protein (PP); Examples 13 use peas (P); Examples 14 use sweet lupins (SL); Examples 15 dehydrated grass meal (DGS), Examples 16 use dehydrated Alfalfa meal (DAM), Examples 17 use corn gluten feed (CGF), Examples 18 use wheat middlings (WM), Examples 19 use extracted sunflower seed meal (SSME); Examples 20 use DDGS corn (DDGSC). Examples with an asterisk are comparative examples that are untreated, this is denoted with "-" in the column of Final Temperature.

In all examples, the vegetable material was subjected to radiation in the radio frequency range, at a frequency of 27.12 MHz. The maximum temperature to which samples were heated by RF radiation is called the 'Final Temperature' ($T_f$), and the time needed to reach said 'Final Temperature', or the irradiation time is called the 'Processing Time' ($t_p$). During this processing time the vegetable material is irradiated with RF. It should be noted that, at constant settings of the RF equipment. the longer the processing time, the higher the final temperature.

*First tests - in vitro proof of concept*

In the examples 1-10, two kilograms of a vegetable material were subjected to RF radiation. These experiments show the effect of RF treatment on the nutritional value and show the effect of different final temperatures/processing times. For each of these examples the dry crude protein (CP dry; viz. the amount of protein in gram per kilogram of dry matter of the material) and Aufrère value (percentage units %) were determined for untreated material (*); the comparative examples; and after RF treatment to four different final temperatures: 90 °C (a); 110 °C (b); 130 °C (c); and 150 °C (d). The results are shown in Tables 1a-1c below.

From Table 1a it is clear that for soybean meal, extracted (Example 1), rapeseed meal, extracted (Example 2) and soybean meal, expeller, the Aufrère value increases significantly; most pronounced at a final temperature of 150 °C Moreover, the crude protein content hardly is affected. All of these examples are for preparing an RF treated material that is for later using as a ruminant feed.

Table 1a

| Ex. | Material# | $T_f$ (°C) | $t_p$ (min) | CP dry (g/kg DM) | Aufrère (%) |
|-----|-----------|-----------|------------|------------------|-------------|
| 1* | SME | - | - | 514 | 41.8 |
| 1a | SME | 90 | 13.5 | 510 | 39.1 |
| 1b | SME | 110 | 15.5 | 512 | 43.4 |
| 1c | SME | 130 | 25 | 510 | 61.1 |
| 1d | SME | 150 | 36 | 509 | 70.3 |
| 2* | RME | - | - | 394 | 65.1 |
| 2a | RME | 90 | 8.5 | 392 | 63.7 |
| 2b | RME | 110 | 11.5 | 389 | 64.6 |
| 2c | RME | 130 | 19.5 | 390 | 67.6 |
| 2d | RME | 150 | 30 | 391 | 76.3 |
| 3* | SMP | - | - | 448 | 53.9 |
| 3a | SMP | 90 | 12 | 446 | 60.3 |
| 3b | SMP | 110 | 13.5 | 446 | 60.6 |
| 3c | SMP | 130 | 18 | 447 | 64.5 |
| 3d | SMP | 150 | 26 | 445 | 65.3 |
| # SME = Soybean meal, extracted; RME = Rapeseed meal, extracted; SMP = Soybean meal, expeller. | | | | | |

Table 1b

| Ex. | Material# | $T_f$ (°C) | $t_p$ (min) | CP dry (g/kg/DM) | Aufrère (%) |
|-----|-----------|-----------|------------|------------------|-------------|
| 4* | RMP | - | - | 382 | 23.9 |
| 4a | RMP | 90 | 12 | 381 | 23 |
| 4b | RMP | 110 | 14 | 379 | 29.9 |
| 4c | RMP | 130 | 22.5 | 377 | 34.7 |
| 4d | RMP | 150 | 31 | 378 | 61.6 |
| 5* | S | - | - | 396 | 11.5 |
| 5a | S | 90 | 12.5 | 399 | 35.9 |
| 5b | S | 110 | 17 | 400 | 44.5 |
| 5c | S | 130 | 22 | 404 | 50.8 |
| 5d | S | 150 | 25 | 400 | 58.1 |
| 6* | R | - | - | 210 | 34.5 |

(continued)

| Ex. | Material# | $T_f$ (°C) | $t_p$ (min) | CP dry (g/kg/DM) | Aufrère (%) |
|---|---|---|---|---|---|
| 6a | R | 90 | 22 | 211 | 32.4 |
| 6b | R | 110 | 26.5 | 211 | 33 |
| 6c | R | 130 | 34 | 211 | 39.4 |
| 6d | R | 150 | 44.5 | 210 | 59.2 |
| 7* | CG | - | | 80 | 72.7 |
| 7a | CG | 90 | 13.5 | 83 | 76.2 |
| 7b | CG | 110 | 22 | 83 | 76.5 |
| 7c | CG | 130 | 38 | 82 | 79.9 |
| 7d | CG | 150 | 56 | 81 | 84.0 |
| # RMP = Rapeseed meal, expeller; S=Soybean; R = Rapeseed; CG = Ground corn kernels | | | | | |

From Table 1b it is clear that for rapeseed meal, expeller (Example 4), whole soybeans (Example 5), whole rapeseed (Example 6), and ground corn (Example 7) the Aufrère value increases significantly; most pronounced at a final temperature of 150 °C Moreover, the crude protein content hardly is affected.

Table 1c

| Ex. | Material# | $T_f$ (°C) | $t_p$ (min) | CP dry (g/kg/DM) | Aufrère (%) |
|---|---|---|---|---|---|
| 8* | CW | - | - | 81 | 70.2 |
| 8a | CW | 90 | 18 | 82 | 75.8 |
| 8b | CW | 110 | 24 | 82 | 78.0 |
| 8c | CW | 130 | 41 | 83 | 81.2 |
| 8d | CW | 150 | 55 | 82 | 82.5 |
| 9* | WG | - | - | 137 | 54.0 |
| 9a | WG | 90 | 17 | 137 | 60.3 |
| 9b | WG | 110 | 24.5 | 137 | 60.0 |
| 9c | WG | 130 | 43 | 134 | 62.0 |
| 9d | WG | 150 | 69 | 136 | 67.5 |
| 10* | WW | - | - | 138 | 48.9 |
| 10a | WW | 90 | 26 | 139 | 46.1 |
| 10b | WW | 110 | 36.5 | 137 | 47.6 |
| 10c | WW | 130 | 55 | 137 | 56.1 |
| 10d | WW | 150 | 85 | 138 | 59.4 |
| # CW = Whole corn kernels; WG = Ground Wheat; WW = Whole Wheat. | | | | | |

From Table 1c it is clear that for whole corn kernels (Example 8), ground wheat (Example 9), and whole wheat (Example 10) the Aufrère value increases significantly; most pronounced at a final temperature of 150 °C Moreover, the crude protein content hardly is affected. Hence, Tables 1a-1c shows that when using the method according to the present invention the value for in vitro protein degradation resistance (Aufrère) increases, without a change in the crude protein content. This means that the nutritional value is increased. More information about in situ tests is shown below.

*in situ tests for the Rumen Undegradable Protein as well as lysine content*

As discussed above it is important to have a as large as possible percentage of protein to by-bass the rumen so that it may be absorbed in the intestines. This increases the nutritional value of the feed. Moreover, since lysine is generally considered to be a limiting amino acid for ruminants; it is preferred to limit the decrease of the lysine content. Hence the RUP % needs to be increased, while minimizing the decrease in lysine content expressed as % of the crude protein.

For three vegetable materials already tested above (soybean meal, extracted/Example 1; rapeseed meal, extracted/Example 2, and rapeseed meal, expeller/Example 4) the lysine content and the in situ RUP value were determined; the same batch of material was used as in the examples disclosed in Tables 1. Two kilograms of the vegetable material were subjected to RF radiation or left untreated (*). Lysine content (g lysine per kg dry matter of sample), percentage of Lysine in the crude protein (Lys % CP), RUP (%) and the rumen undegradable lysine fraction (RU lys dry) based on dry matter is calculated based on RUP. Table 2 shows the results. From Table 2 it is very clear that there is a significant increase in the RUP value indicating that the nutritional value is significantly increased. It is also clear that the lysine content on dry matter decreases slightly upon RF treatment. However, the RU Lys content on dry matter increases upon RF treatment. Moreover, from these data it can be concluded that the Aufrère test - already indicating in increase in rumen undegradable protein in Tables 1 - is a good in vitro indicator for the in situ RUP value.

Table 2

| Ex. | Lys (g/kg dm)* | Lys % CP | RUP (%) | RU Lys dry (g/kg dm)* |
|---|---|---|---|---|
| 1* | 30.9 | 6.07 | 41.4 | 12.8 |
| 1c | 29.8 | 5.86 | 56.0 | 16.7 |
| 1d | 27.5 | 5.36 | 70.3 | 19.3 |
| 2* | 21.4 | 5.49 | 48.7 | 10.4 |
| 2c | 20.4 | 5.21 | 59.0 | 12.0 |
| 2d | 17.6 | 4.50 | 74.5 | 13.1 |
| 4* | 22.9 | 6.0 | 11.2 | 2.6 |
| 4c | 21.8 | 5.7 | 20.0 | 4.4 |
| 4d | 18.5 | 4.9 | 59.9 | 11.1 |
| * g/kg dm = g / kg dry matter | | | | |

*Determination of increased nutritional value for protein, starch and fat*

A number of tests were carried out with a different batch (2 kg) of materials (either the same as used in Table 1 - viz. examples without accent ' or different batches - viz. examples with accent '). The results are shown in Table 3, including crude protein (CP on dry matter), starch (on dry matter), in vitro protein degradation resistance (Aufrère), the in situ protein, starch and fat degradation resistance (RUP, RUS, and RUF respectively), digestibility of rumen undegraded protein (dRUP) and in vitro ileal protein digestion.

Table 3

| Ex. | $T_f$ (°C) | $t_p$ (min) | CP dry (g/kg DM) | Starch dry (g/kg) | Aufrère (%) | RUP (%) | RUS (%) | RUF (%) | dRUP (%) | VIPD (%) |
|---|---|---|---|---|---|---|---|---|---|---|
| 1'* | - | - | 514 | - | 41.8 | 41.4 | - | - | 98.4 | >99 |
| 1'a | 130 | 10 | 510 | - | 61.1 | 56 | - | - | 99.1 | >99 |
| 1'b | 150 | 15 | 520 | - | 69.0 | 63.9 | - | - | 99.3 | 95 |
| 1'c | 160 | 18 | 518 | - | 69.8 | 73.3 | - | - | 98.7 | 91 |
| 1'd | 180 | 21 | 527 | - | 73.1 | 79.0 | - | - | 85.7 | 74 |
| 2'* | - | - | 394 | - | 65.1 | 48.7 | - | - | 84.8 | 93 |
| 2'a | 130 | 19.5 | 390 | - | 67.6 | 59.0 | - | - | 88.2 | 95 |
| 2'b | 150 | 30 | 391 | - | 76.3 | 74.5 | - | - | 89.3 | 81 |
| 4'* | - | - | 382 | - | 23.9 | 11.2 | - | - | 24.8 | 96 |

(continued)

| Ex. | $T_f$ (°C) | $t_p$ (min) | CP dry (g/kg DM) | Starch dry (g/kg) | Aufrère (%) | RUP (%) | RUS (%) | RUF (%) | dRUP (%) | VIPD (%) |
|---|---|---|---|---|---|---|---|---|---|---|
| 4'a | 130 | 22.5 | 377 | - | 34.7 | 20.0 | - | - | 49.4 | >99 |
| 4'b | 150 | 31 | 378 | - | 61.6 | 59.9 | - | - | 84.1 | >99 |
| 5' * | - | - | 425 | - | 17.4 | 22.8 | - | 9.80 | 94.4 | >99 |
| 5'a | 140 | 9 | 431 | - | 53.2 | 40.1 | - | 25.1 | 98.5 | 91 |
| 5'b | 160 | 13 | 431 | - | 62.8 | 46.3 | - | 32.5 | 98.8 | 92 |
| 5'c | 180 | 23 | 443 | - | 68.2 | 53.9 | - | 41.0 | 84.8 | 70 |
| 8' * | - | - | 90 | 703 | 71.6 | 42.4 | 31.3 | - | 93.0 | 87 |
| 8'a | 120 | 11 | 90 | 720 | 78.8 | 52.3 | 34.3 | - | 93.3 | 94 |
| 8'b | 160 | 22 | 88 | 699 | 83.1 | 63.3 | 42.7 | - | 85.6 | 82 |
| 8'c | 180 | 31 | 89 | 707 | 85.9 | 69.5 | 46.6 | - | 77.4 | 67 |
| 10' * | - | - | 125 | 683 | 50.9 | 20.5 | 5.2 | - | 65.8 | 89 |
| 10'a | 120 | 11.0 | 125 | 672 | 60.3 | 43.4 | 15.8 | - | 92.9 | 92 |
| 10'b | 160 | 24.0 | 126 | 676 | 63.8 | 58.5 | 28.6 | - | 94.4 | 90 |
| 10'c | 180 | 34.0 | 126 | 672 | 61.0 | 64.3 | 32.4 | - | 90.3 | 83 |
| 11' * | - | - | 106 | 630 | 59.0 | 24.6 | 10.4 | - | 74.5 | 90 |
| 11'a | 140 | 12.5 | 109 | 621 | 73.5 | 47.1 | 17.5 | - | 90.3 | 88 |
| 11'b | 160 | 17 | 107 | 622 | 76.1 | 50.8 | 21.2 | - | 91.2 | 80 |

From the table above it is clear that the Aufrère test is a good indication of the undegradable protein fraction as measured by RUP. The Table shows that the method according to the present invention is very suitable for increasing the nutritional values of vegetable materials for protein, starch and fat.

*Determination of effect of RF treatment on several different vegetable materials*

Several additional vegetable materials (viz. potato protein, peas, sweet lupins, dehydrated grass meal, dehydrated Alfalfa meal, corn gluten feed, wheat middlings, extracted sunflower seed meal and DDGS corn) were tested. The results are shown in Table 4 for untreated and RF treated materials (at several temperatures).

From the table above it is clear that the present invention is very suitable for increasing the nutritional value of many different types of vegetable materials.

Table 4.

| Ex. | $T_f$ (°C) | $t_p$ (min) | CP dry (g/kg) | Aufrère (%) |
|---|---|---|---|---|
| 12* | - | - | 819 | 93.5 |
| 12a | 130 | 15 | 806 | 94.3 |
| 12b | 150 | 30 | 808 | 94.5 |
| 12c | 170 | 48 | 808 | 94.6 |
| 13* | - | - | 195 | 23.3 |
| 13a | 130 | 36 | 210 | 31.5 |
| 13b | 150 | 46 | 209 | 40.4 |
| 13c | 170 | 23 | 208 | 56.2 |
| 14* | - | - | 368 | 15.8 |

(continued)

| Ex. | $T_f$ (°C) | $t_p$ (min) | CP dry (g/kg) | Aufrère (%) |
|---|---|---|---|---|
| 14a | 130 | 23 | 363 | 16.0 |
| 14b | 150 | 35 | 366 | 14.8 |
| 14c | 170 | 52 | 375 | 19.4 |
| 15* | - | - | 216 | 37.0 |
| 15a | 130 | 13 | 216 | 38.8 |
| 15b | 150 | 15 | 220 | 49.5 |
| 15c | 170 | 21 | 222 | 57.2 |
| 16* | - | - | 177 | 57.9 |
| 16a | 130 | 8 | 176 | 62.5 |
| 16b | 150 | 10 | 177 | 63.2 |
| 16c | 170 | 16 | 182 | 65.2 |
| 17* | - | - | 209 | 33.5 |
| 17a | 130 | 7 | 212 | 34.4 |
| 17b | 150 | 8 | 209 | 36.4 |
| 17c | 170 | 10 | 215 | 42.3 |
| 18* | - | - | 173 | 47.2 |
| 18a | 130 | 13 | 174 | 58.3 |
| 18b | 150 | 25 | 171 | 61.7 |
| 18c | 170 | 34 | 173 | 66.3 |
| 19* | - | - | 312 | 21.3 |
| 19a | 130 | 12 | 320 | 24.3 |
| 19b | 150 | 19 | 319 | 26.8 |
| 19c | 170 | 29 | 311 | 36.6 |
| 20* | - | - | 311 | 69.2 |
| 20a | 130 | 6 | 316 | 71.6 |
| 20b | 150 | 7 | 316 | 76.1 |
| 20c | 170 | 8 | 319 | 73.2 |

*Determination of effect RF treatment on mixtures of vegetable materials - in vitro analysis*

Several mixtures of vegetable materials have been prepared and tested in vitro for Aufrère, the results are shown in Table 5. A protein-rich mixture (mixture A) is provided based on soybean meal, extracted and rapeseed meal, extracted (50/50 w/w). A mixture comprising both protein-rich and starch-rich vegetable material (Mixture B) is provide based on soybean meal and ground wheat (50/50 w/w). A mixture comprising both protein-rich and starch-containing vegetable material (Mixture C) is provide based on soybean meal, extracted and corn gluten feed (50/50 w/w). A compounded protein-rich feed (Mixture D) is provided based on soybean meal, extracted; Rapeseed meal, extracted; citrus pulp, ground wheat, palmkernel meal, and vinnases (45/10/20/20/4/1 w/w).

Table 5

| Mixture | $T_f$ (°C) | $t_p$ (min) | CP dry (g/kg DM) | Aufrère (%) |
|---|---|---|---|---|
| A | - | - | 454 | 55.0 |
| A | 130 | 15 | 453 | 63.1 |

(continued)

| Mixture | $T_f$ (°C) | $t_p$ (min) | CP dry (g/kg DM) | Aufrère (%) |
|---------|-----------|-------------|------------------|-------------|
| A | 150 | 22 | 454 | 72.0 |
| A | 170 | 31 | 457 | 76.8 |
| B | - | - | 335 | 56.1 |
| B | 130 | 13 | 339 | 65.4 |
| B | 150 | 27 | 350 | 77.3 |
| B | 170 | 25 | 335 | 78.6 |
| C | - | - | 363 | 45.2 |
| C | 130 | 9 | 366 | 53.4 |
| C | 150 | 11 | 372 | 62.6 |
| C | 170 | 15 | 373 | 66.9 |
| D | - | - | 328 | 56.8 |
| D | 130 | 14 | 326 | 62.2 |
| D | 150 | 26 | 332 | 72.5 |
| D | 170 | 41 | 329 | 75.6 |

From the table above it is clear that the present invention is very suitable for increasing the nutritional value of mixtures of different types of vegetable materials.

*Animal trial to determine effect of RF treated feed on milk quality*

An animal trial was carried out using treated and untreated soybean meal (extracted). For the animal trial a batch of soybean meal was split in two parts: one part remained untreated and the other part was RF treated.

In the animal trial 32 lactating dairy cows were used from the dairy herd of Dairy Campus in Lelystad (The Netherlands); the cows were divided in two groups of 16 cows, one test group (feed with RF treated soybean meal) and control group (feed with untreated soybean meal). The results are shown in Figure 1 which has on the X-axis the number of weeks and on the Y-axis the milk protein production in grams/cow/day.

The trial period was divided in the following periods:

- adaptation period (2 weeks); cows to get used to barn used for experiment;
- pre-period (PP) (2 weeks; week 3-4); all cows received the same diet;
- transition period (1 week; week 5); cows gradually switched to the experimental feeds (untreated or treated);
- main period (9 weeks, week 6-15); cows in both groups were fed the experimental feeds (untreated or treated).

Cows received a partial mixed ration (PMR) in RIC (Roughage Intake Control, Insentec, Marknesse) bins. The PMR contained either 7% untreated soybean meal or 7% RF treated soybean meal (dry matter based). The composition of the PMR is shown in the table below.

| Partial Mixed Ration (PMR) | Dry matter content | weight % based on dry matter | |
|----------------------------|--------------------|---------|------|
| | | control | test |
| Grass silage | 326 | 32.3 | 32.3 |
| Corn silage | 365 | 48.5 | 48.5 |
| Wheat straw | 900 | 10.8 | 10.8 |
| Mineral mix 1 | 990 | 0.75 | 0.75 |
| Mineral mix 2 | 990 | 0.54 | 0.54 |
| Soybeanmeal untreated | 890 | 7 | |

(continued)

| Partial Mixed Ration (PMR) | Dry matter content | weight % based on dry matter | |
|---|---|---|---|
| Soybeanmeal RF treated | 976 | | 7 |
| Salt | 990 | 0.22 | 0.22 |
| **Total** | | **100** | **100** |

The experiment was performed as a completely randomized block design with two animals per block. The feed intake and milk production data from the pre-period were used to assign the cows to the two treatment groups for the main period. Cows were assigned to dietary treatments (and blocks) based on parity, milk protein production (kg/day), days in milk and bodyweight.

Apart from the PMR all cows consumed 0.9 kg DM per cow per day of a compound feed supplied in the milking parlor and all cows received an additional compound feed in automatic feeders. These compound feeds were the same for all cows. The amount of this additional compound feed varied per block, depending on the milk production level of that block. Within one block of cows the additional compound feed supplementation was the same. On average the cows consumed 13.3 kg dry matter of the PMR per cow per day corresponding to 0.93 kg/dry matter soybean meal (untreated or RF treated). On average cows on both treatments consumed 7.5 kg dry matter additional compound feed by the automatic feeders resulting in an average total daily feed intake of 21.7 kg dry matter.

Cows receiving RF treated soybean meal produced more milk protein (g/cow/day) than cows receiving untreated soybean meal (see figure 1). On average cows receiving RF treated soybean meal produced 49 gram milk protein per cow per day more than cows receiving untreated soybean meal (P=0.056). This clearly shows the beneficial effect of the treatment of the present invention on increasing the nutritional value.

From the Examples it is clear that the method according to the present invention increases the nutritional value of the vegetable material that is treated that is used as a feed for ruminants and hence one or more objects of the present invention are achieved by the present method which is further elucidated in the appended claims.

## Claims

1. A method of using a vegetable material as a feed for ruminants by decreasing the protein solubility of said vegetable material and by increasing the protein fraction that is resistant to microbial degradation in the rumen of the ruminants, the method comprising subjection of a vegetable material to direct heating by means of radiation in the radio frequency (RF) range and use of said vegetable material thus treated as the feed for ruminants, said subjection of said vegetable material comprises the steps of:

   i) providing a vegetable material having an initial Aufrère value measured according to the method in the description, and
   ii) subjecting the vegetable material of i) to direct heating by means of radiation in the radio frequency range thereby obtaining a RF treated vegetable material,

   wherein in step ii) the processing time is between 5 minutes and 1.5 hours and the range of the radio frequency radiation is between 10 MHz and 50 MHz to achieve a material temperature of between 110°C and 170°C, such that the Aufrère value of the RF treated vegetable material obtained after step ii) measured according to the method in the description is increased compared to the initial Aufrère value of the vegetable material of step i).

2. The method according to claim 1, wherein the processing time of the vegetable material subjected to heating by means of radiation in the radio frequency range is between 10 minutes and 1.5 hours, such as between 20 minutes and 1 hour, more preferably between 20 minutes and 50 minutes, such as between 20 minutes and 35 minutes.

3. The method according to any one of the preceding claims, wherein the range of radio frequency radiation is 27.12 MHz $\pm$ 0.6 %.

4. The method according to any one of the preceding claims, wherein the vegetable material is selected from grains, tubers and residual vegetable materials and one or more combinations thereof.

5. The method according to any one of the preceding claims, wherein the residual vegetable material is residue of grain processing, preferably a residue of processing of rapeseed, soybean, wheat, barley or corn and one or more combinations thereof, more preferably rapeseed meal, soybean meal, sunflower seed meal, dehydrated Alfalfa meal, dehydrated grass meal, DDGS corn and one or more combinations thereof or wherein the grains are selected from the group consisting of cereal grains, legumes and oilseeds, more preferably corn, peas, sweet lupines, soybeans, barley, rapeseed, wheat, and one or more combinations thereof or wherein the tubers are selected from the group consisting of yam, potato, such as potato protein, sweet potato, cassava and one or more combinations thereof.

6. The method according to any one of the preceding claims, wherein the material is subjected to RF radiation to achieve a material temperature of between 110°C and 165°C, such as between 120 °C and 165 °C, even more preferably between 130 and 165 °C, most preferably between 130 and 150 °C.

**Patentansprüche**

1. Verfahren zur Verwendung eines pflanzlichen Materials als Futter für Wiederkäuer durch Verringern der Proteinlöslichkeit des pflanzlichen Materials und durch Erhöhen des Proteinanteils, der beständig gegen mikrobiellen Abbau in dem Pansen der Wiederkäuer ist, wobei das Verfahren Unterwerfen eines pflanzlichen Materials an direkte Erhitzung durch Strahlung in dem Radiofrequenzbereich (RF) und Verwenden des so behandelten pflanzlichen Materials als das Futter für Wiederkäuer umfasst, wobei das Unterwerfen des pflanzlichen Materials die Schritte umfasst:

   i) Bereitstellen eines pflanzlichen Materials mit einem Anfangs-Aufrère-Wert, gemessen gemäß dem Verfahren in der Beschreibung, und
   ii) Unterwerfen des pflanzlichen Material aus i) an direkte Erhitzung durch Strahlung in dem Radiofrequenzbereich, um ein RF-behandeltes pflanzliches Material zu erhalten,

   wobei bei Schritt ii) die Verarbeitungszeit zwischen 5 Minuten und 1,5 Stunden beträgt und der Bereich der Radiofrequenzstrahlung zwischen 10 MHz und 50 MHz liegt, um eine Materialtemperatur von zwischen 110 °C und 170 °C zu erzielen, so dass der Aufrère-Wert des nach Schritt ii) erhaltenen RF-behandelten pflanzlichen Materials, gemessen gemäß dem Verfahren in der Beschreibung, im Vergleich zu dem Anfangs-Aufrère-Wert des pflanzlichen Materials von Schritt i) erhöht ist.

2. Verfahren nach Anspruch 1, wobei die Verarbeitungsdauer des pflanzlichen Materials, das Erhitzen durch Strahlung in dem Radiofrequenzbereich unterworfen wird, zwischen 10 Minuten und 1,5 Stunden, wie z.B. zwischen 20 Minuten und 1 Stunde, bevorzugter zwischen 20 Minuten und 50 Minuten, wie z.B. zwischen 20 Minuten und 35 Minuten, beträgt.

3. Verfahren nach einem der vorhergehenden Ansprüche, wobei der Bereich der Radiofrequenzstrahlung 27,12 MHz $\pm$ 0,6 % beträgt.

4. Verfahren nach einem der vorstehenden Ansprüche, wobei das pflanzliche Material ausgewählt ist aus Körnern, Knollenfrüchten und pflanzlichen Restmaterialien und einer oder mehreren Kombinationen davon.

5. Verfahren nach einem der vorstehenden Ansprüche, wobei das pflanzliche Restmaterial Rückstand von Getreideverarbeitung ist, vorzugsweise ein Rückstand von Verarbeitung von Rapssamen, Sojabohnen, Weizen, Gerste oder Mais und eine oder mehrere Kombinationen davon, bevorzugter Rapsmehl, Sojabohnenmehl, Sonnenblumenkernmehl, dehydratisiertes Alfalfa-Mehl, dehydratisiertes Grasmehl, DDGS-Mais und eine oder mehrere Kombinationen davon, oder wobei die Körner ausgewählt sind aus der Gruppe bestehend aus Getreidekörnern, Hülsenfrüchten und Ölsaaten, bevorzugter Mais, Erbsen, Süßlupinen, Sojabohnen, Gerste, Rapssamen, Weizen und eine oder mehrere Kombinationen davon, oder wobei die Knollenfrüchte ausgewählt sind aus der Gruppe bestehend aus Yam, Kartoffel, wie z.B. Kartoffelprotein, Süßkartoffel, Maniok und einer oder mehreren Kombinationen davon.

6. Verfahren nach einem der vorstehenden Ansprüche, wobei das Material RF-Strahlung unterworfen wird, um eine Materialtemperatur von zwischen 110 °C und 165 °C, wie z.B. zwischen 120 °C und 165 °C, noch bevorzugter zwischen 130 und 165 °C, höchst bevorzugt zwischen 130 und 150 °C, zu erzielen.

**Revendications**

1. Procédé d'utilisation d'une matière végétale comme aliment pour ruminants en diminuant la solubilité de protéines de ladite matière végétale et en augmentant la fraction protéique qui est résistante à la dégradation microbienne dans le rumen des ruminants, le procédé comprenant la soumission d'une matière végétale à un chauffage direct au moyen d'un rayonnement dans la gamme des radiofréquences (RF) et l'utilisation de ladite matière végétale ainsi traitée comme étant l'aliment pour ruminants, ladite soumission de ladite matière végétale comprend les étapes de :

i) fourniture d'une matière végétale ayant une valeur Aufrère initiale mesurée selon le procédé dans la description, et
ii) soumission de la matière végétale de i) à un chauffage direct au moyen d'un rayonnement dans la gamme des radiofréquences, obtenant ainsi une matière végétale traitée par RF,

dans lequel à l'étape ii) le temps de traitement est compris entre 5 minutes et 1,5 heure et la gamme du rayonnement radiofréquence est comprise entre 10 MHz et 50 MHz pour atteindre une température de matière comprise entre 110°C et 170°C, de sorte que la valeur Aufrère de la matière végétale traitée par RF obtenue après l'étape ii) mesurée selon le procédé dans la description augmente par rapport à la valeur Aufrère initiale de la matière végétale de l'étape i).

2. Procédé selon la revendication 1, dans lequel le temps de traitement de la matière végétale soumise à un chauffage au moyen d'un rayonnement dans la gamme des radiofréquences est compris entre 10 minutes et 1,5 heure, par exemple entre 20 minutes et 1 heure, plus préférablement entre 20 minutes et 50 minutes, par exemple entre 20 minutes et 35 minutes.

3. Procédé selon l'une quelconque des revendications précédentes, dans lequel la gamme de rayonnement radiofréquence est de 27,12 MHz $\pm$ 0,6%.

4. Procédé selon l'une quelconque des revendications précédentes, dans lequel la matière végétale est choisie parmi les grains, les tubercules et les matières végétales résiduelles et une ou plusieurs combinaisons de ceux-ci.

5. Procédé selon l'une quelconque des revendications précédentes, dans lequel la matière végétale résiduelle est un résidu de traitement de grains, de préférence un résidu de traitement de colza, de soja, de blé, d'orge ou de maïs et d'une ou de plusieurs combinaisons de ceux-ci, plus préférablement un tourteau de colza, un tourteau de soja, un tourteau de graines de tournesol, de la farine de luzerne déshydratée, de la farine d'herbe déshydratée, des DDGS de maïs et une ou de plusieurs combinaisons de ceux-ci ou dans lequel les grains sont choisis dans le groupe constitué de grains de céréales, de légumineuses et de graines oléagineuses, plus préférablement de maïs, de pois, de lupins doux, de soja, d'orge, de colza, de blé et d'une ou de plusieurs combinaisons de ceux-ci ou dans lequel les tubercules sont choisis dans le groupe constitué d'igname, de pomme de terre, telle que la protéine de pomme de terre, de patate douce, de manioc et d'une ou de plusieurs combinaisons de ceux-ci.

6. Procédé selon l'une quelconque des revendications précédentes, dans lequel la matière est soumise à un rayonnement RF pour atteindre une température de matière comprise entre 110°C et 165°C, par exemple entre 120°C et 165°C, encore plus préférablement entre 130 et 165°C, idéalement entre 130 et 150°C.

**Fig. 1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3507662 A
- US 3619200 A
- US 5023091 A
- US 3695891 A
- JP S4912709 B

- NL 9300976 A
- US 2014011742 A1
- DE 102009038624 B3
- WO 0172143 A1

**Non-patent literature cited in the description**

- **DONG. S et al.** *Asian Australas. J. Anim. Sci.*, 2005, vol. 18, 27-31
- **SADEGHI A. et al.** *Anim. Sci.*, 2005, vol. 80, 369-375
- **BRODIE G et al.** *J. Microwave Power E. E.*, 2012, vol. 46, 57-67
- **DONG. S. et al.** *Asian Australas. J. Anim. Sci.*, 2005, vol. 18, 27-31
- **BRODIE G.** *J. Microwave Power E. E.*, 2012, vol. 46, 57-67

- The effect of rapeseed treatment by microwave and radio-frequency application on oil extraction and quality. **OBERNDORFER et al.** Fat Science Technology. Wiley-VCH Verlag, 01 May 1999, vol. 101, 164-167
- **J. L. DE BOEVER ; M. C. BLOK ; S. MILLET ; J. VANACKER ; S. DE CAMPENEERE.** The energy and protein value of wheat, maize and blend DDGS for cattle and evaluation of predicting methods. *Animal*, 2014, vol. 8 (11), 1839-1850